# EUROPEAN PATENT SPECIFICATION

(11) **EP 1 036 459 B1**
(45) Date of publication and mention of the grant of the patent: **18.06.2003**
(21) Application number: 98961227.0
(22) Date of filing: 16.11.1998
(51) Int. Cl.: H04L 29/06

(54) **SYSTEM FOR PROCESSING BROADCASTED SIGNALS**
SYSTEM ZUR VERARBEITUNG VON RUNDFUNKSIGNALEN
SYSTEME DE TRAITEMENT DE SIGNAUX RADIODIFFUSES

(30) Priority: 24.11.1997 EP 97203667
(43) Date of publication of application: 20.09.2000
(73) Proprietor: Irdeto Access B.V., 2132 HD Hoofddorp (NL)
(72) Inventor: WAJS, Andrew, Augustine, NL-2023 AA Haarlem (NL); FRANSDONK, Robert, NL-2102 GW Heemstede (NL)
(74) Representative: de Vries, Johannes Hendrik Fokke
(86) International application number: EP9807517
(87) International publication number: WO99027690

(56) References cited:
- WO-A-97/27546
- GB-A- 2 307 381

## Description

The present invention relates to a system for controlling a tuning means for receiving broadcasted signals according to the preamble of claim 1.

Such systems are known and are used in analogue TV sets and digital TV sets. Digital TV sets operate in accordance with the DVB (Digital Video Broadcasting) standard and recently introduced digital TV sets are enhanced with peripherals like modems for user-feedback. Further, microcomputers, in particular PC's, are generally known for which recently internal or external devices are introduced for receiving broadcasted signals, such as analogue or DVB signals. An example of such a device is an integrated network PC card. PC's with modems are widely used to access the internet, wherein generally a browser program is used. These recent developments show an integration of PC and TV technology. GB-A-2 307 381 discloses an example of such an integrated system. In this known system a data file is obtained from the internet and this data file is directly used to control the tuning means.

The present invention aims to provide an improved system of this type.

According to the invention a system of the above-mentioned type is provided characterized in that a number of URL's for broadcast services are defined as URL's, wherein the system comprises a memory for storing tuning information for a number of broadcast services, and means for selecting a URL on a web page, the microcomputer being adapted to retrieve tuning information from the memory by means of a selected URL, wherein the microcomputer is adapted to use the retrieved tuning information for controlling the tuning means to receive broadcast signals from the corresponding broadcast service.

In the system of the invention the information obtained by selecting a specific URL corresponding to a specific broadcast service is used by the system, i.e. the microcomputer to retrieve the corresponding tuning information from an internal memory. In this manner a flexible system is obtained, wherein the tuning information for the broadcast service can be adapted to the location where the system is used. Thereby the same web pages with URL's can be used world wide, while it is possible to use the information contained in the URL to provide the tuning means tuning information applicable to local broadcast services, which tuning information can be different for different locations.

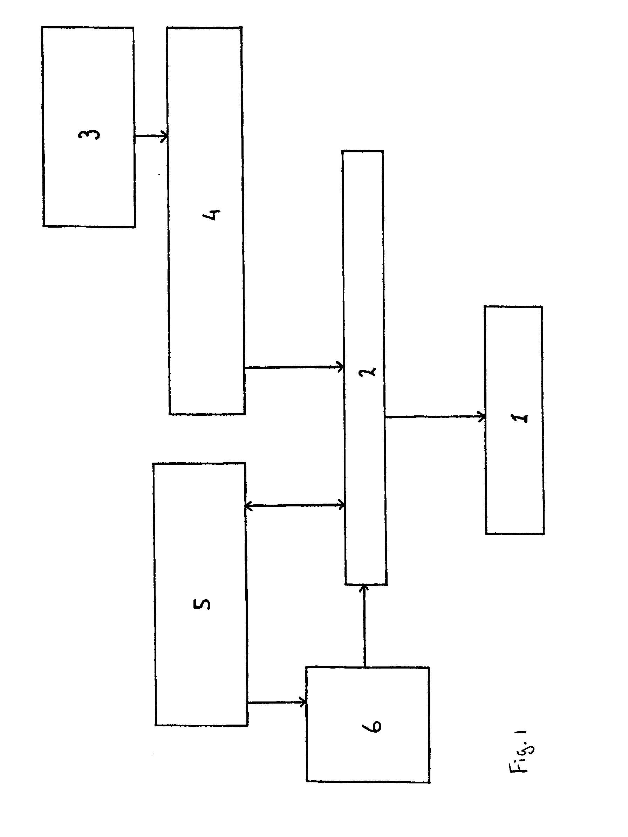

The invention will be further explained by reference to the drawing in which the software architecture of an embodiment of the system according to the invention is schematically shown.

A system for processing Digital Video Broadcasting (DVB) signals comprises a microcomputer not further shown. The microcomputer is provided with a DVB device 1 also called a network card. This DVB device can be tuned to a specific transport stream as controlled by a driver 2 as will be further explained hereinafter. The microcomputer is connected to the internet and to a MPEG signal source, for example through a satellite, cable or terrestrial transmission. When the DVB device 1 is tuned to a specific transport stream, the video, audio or data information received is further processed in a manner known per se so that for example the video information will be displayed on the microcomputer monitor.

In the embodiment shown in the drawing, a browser program indicate as block 3, is used to access the internet and by going to a certain web site a web page can be displayed on the monitor in a manner known per se. Such web pages may contain one or more URL's providing a connection to another web site by clicking on such a URL, as is well known.

According to the present invention URL's are used to tune the DVB device 1 to a specific DVB service in the following manner. Activating a selected URL results in providing an IP address by the browser 3 to an IP stack 4. The IP stack 4 computes a so-called MAC (Medium Access Control) address from the IP address received from the browser 3. A control program 5 which is part of the driver 2, receives this MAC address and looks up corresponding tuning information and a service identification from a navigation table 6 stored in a memory. This tuning information and service identification are used by the driver 2 to control the DVB device 1 to tune to the DVB service corresponding to the selected URL. As the operation for tuning the network card or DVB device 1 to the correct transport stream is generally known in DVB technology, this tuning is not further described.

In this manner a standard browser program 3 with IP stack 4 which is also standard in multicast Ethernet applications, can be used to tune the network card to the DVB service. Thereby the system provides a full integration of PC and DVB TV technology in a simple manner. The network card 1 can be tuned to a desired DVB service by simply clicking for example on the name of this DVB service.

It is noted that the retrieval of the tuning information from the navigation table is not restricted to the use of an IP address and computation of a MAC address. Other translations of the information in the URL into access information to retrieve the coresponding tuning information can be used.

According to a favourable embodiment the microcomputer is programmed such that the user can select a plurality of HTML pages for storing in memory so that frequently used web pages can be immediately displayed. For example an electronic program guide can be stored in this manner in memory in the microcomputer so that this program guide is immediately available to the user. In this program guide URL's can be embedded for each of the DVB services included in the program guide. By clicking on a URL for a selected DVB service the network card 1 will be tuned to the desired DVB service. Of course it is also possible to have a default setting in the computer for storing certain HTML pages.

As an alternative for a system based on a PC as a microcomputer, the system can be based on a DVB TV set having a so-called set top box. This set top box is preferably configured to cache a plurality of HTML pages as electronic program guide pages for the DVB TV set. As the set top box has a connection to the internet, one or more of the cached pages can provide URL's to internet sites instead of DVB services. In the present specification the word microcomputer is used to cover a PC, set top box or any other equivalent equipment. Further it is noted that the word internet is used to cover also any intranet or other equivalent network.

In an other embodiment of the system described, a special broadcast enhanced browser can be used, wherein the enhancement provides for processing of special URL syntax DVB addresses, wherein the normal internet address in a URL is replaced by a DVB address as follows:
dvb://<original network id.>.<service id>/ In this example the DVB address is a 16 bit original network identifier in combination with a 16 bit service identifier. For compatibility with the internet protocol, the two 16 bit values can be split into four 8 bit values. The DVB address will be indicated in this specification as <DVB address>.

In a further embodiment, the URL can contain an indication of the type of DVB service such as TV, radio and data, in the following manner:
dvb-tv://<DVB address>
dvb-radio://<DVB address>
DVB-data://<DVB address>.

It is noted that in the above described embodiments MPEG signals are mentioned as an example of broadcast signals. It is also possible to apply the invention in a system operating with other broadcast signals and also with analogue signals. It is further noted that the wording 'broadcast channel' covers any non IP based broadcast channel.

## Claims

1. System for controlling a tuning means for receiving broadcasted signals, comprising a microcomputer, and means to connect the system to the internet, the microcomputer being adapted to process IP signals and to display web pages including URL's, wherein the microcomputer is adapted to obtain broadcast service information from the internet, **characterized in that** a number of URL's for broadcast services are defined as URL's, wherein the system comprises a memory for storing tuning information for a number of broadcast services, and means for selecting a URL, the microcomputer being adapted to retrieve tuning information from the memory by means of a selected URL, wherein the microcomputer is adapted to use the retrieved tuning information for controlling the tuning means to receive broadcast signals from the corresponding broadcast service.

2. System according to claim 1, wherein the microcomputer is adapted to translate the selected URL into an address which is used to access the memory for retrieving the tuning information of the corresponding broadcast service.

3. System according to claim 2, wherein the selected URL provides an IP address which is placed in an IP stack, wherein the IP address is translated in a MAC address, said MAC address being used to access said memory.

4. System according to claim 3, wherein the URL's for broadcast services are defined in a broadcast URL syntax broadcast://<broadcast address>.

5. System according to any one of the preceding claims, comprising means for downloading a tuning table from an external source, preferably from the internet or a broadcast service provider.

6. System according to any one of the preceding claims, comprising means for selecting a plurality of HTML pages and means for caching the selected HTML pages.

7. System according to claim 6, wherein said HTML pages include an electronic program guide, said electronic program guide including URL's for broadcast services.

## Patentansprüche

1. System zum Steuern einer Abstimmeinrichtung zum Empfangen von Rundfunksignalen, das einen Mikrocomputer sowie eine Einrichtung zum Verbinden des Systems mit dem Internet umfasst, wobei der Mikrocomputer so eingerichtet ist, dass er IP-Signale verarbeitet und Webseiten einschließlich URL anzeigt, und der Mikrocomputer so eingerichtet ist, dass er Rundfunkdienstinformationen aus dem Internet bezieht, **dadurch gekennzeichnet, dass** eine Anzahl von URL für Rundfunkdienste als URL definiert sind, wobei das System einen Speicher zum Speichern von Abstimminformationen für eine Anzahl von Rundfunkdiensten sowie eine Einrichtung zum Auswählen einer URL umfasst, der Mikrocomputer so eingerichtet ist, dass er Abstimminformationen aus dem Speicher mittels einer ausgewählten URL abruft, und der Mikrocomputer so eingerichtet ist, dass er die abgerufenen Abstimminformationen nutzt, um die Abstimmeinrichtung zum Empfangen von Rundfunksignalen von dem entsprechenden Rundfunkdienst zu steuem.

2. System nach Anspruch 1, wobei der Mikrocomputer so eingerichtet ist, dass er die ausgewählte URL in eine Adresse übersetzt, die genutzt wird, um auf den Speicher zuzugreifen und die Abstimminformationen des entsprechenden Rundfunkdienstes abzurufen.

3. System nach Anspruch 2, wobei die ausgewählte URL eine IP-Adresse bereitstellt, die in einem IP-Stack angeordnet ist, die IP-Adresse in eine MAC-Adresse übersetzt wird und die MAC-Adresse zum Zugriff auf den Speicher genutzt wird.

4. System nach Anspruch 3, wobei die URL für Rundfunkdienste in einer Rundfunk-URL-Syntax, d.h. /rundfunk://<rundfunk-adresse>/, definiert sind.

5. System nach einem der vorangehenden Ansprüche, das eine Einrichtung zum Herunterladen einer Abstimmtabelle von einer externen Quelle, vorzugsweise aus dem Internet oder von einem Rundfunkdienstanbieter, umfasst.

6. System nach einem der vorangehenden Ansprüche, das eine Einrichtung zum Auswählen einer Vielzahl von HTLM-Seiten und eine Einrichtung zum Caching der ausgewählten HTLM-Seiten umfasst.

7. System nach Anspruch 6, wobei die HTLM-Seiten einen elektronischen Programmführer enthalten und der elektronische Programmführer URL für Rundfunkdienste enthält.

## Revendications

1. Système pour contrôler un moyen de réglage ou accord pour recevoir des signaux diffusés, comprenant un micro-ordinateur et un moyen pour connecter le système à Internet, le micro-ordinateur étant adapté pour traiter des signaux IP et pour afficher des pages Web incluant des URL, dans lequel le micro-ordinateur est adapté pour obtenir des informations de services diffusés provenant d'Internet, **caractérisé en ce que** un certain nombre d'URL destinés aux services diffusés sont définis comme URL, dans lequel le système comporte une mémoire pour stocker les informations de réglage pour un certain nombre de services diffusés et un moyen pour sélectionner un URL, le micro-ordinateur étant adapté pour rechercher les informations de réglage dans la mémoire à l'aide de l'URL sélectionné, dans lequel le micro-ordinateur est adapté pour utiliser les informations de réglage récupérées pour commander le moyen de réglage pour recevoir des signaux diffusés depuis le service diffusé correspondant.

2. Système selon la revendication 1, dans lequel le micro-ordinateur est adapté pour traduire l'URL sélectionné en une adresse qui est utilisée pour accéder à la mémoire pour récupérer les informations de réglage du service radiodiffusé correspondant.

3. Système selon la revendication 2, dans lequel l'URL sélectionné fournit une adresse IP qui est placée dans une pile IP, dans lequel l'adresse IP est traduite en adresse MAC, ladite adresse MAC étant utilisée pour accéder à ladite mémoire.

4. Système selon la revendication 3, dans lequel les URL pour les services diffusés sont définis dans une syntaxe d'URL de diffusion /broadcast ://<broadcast address>.

5. Système selon l'une quelconque des revendications précédentes, comprenant un moyen pour télécharger un tableau de réglage depuis une source externe, de préférence depuis Internet ou depuis un fournisseur de services diffusés.

6. Système selon l'une quelconque des revendications précédentes, comprenant un moyen pour sélectionner une pluralité de pages HTML et un moyen pour placer en mémoire cache les pages HTML sélectionnées.

7. Système selon la revendication 6, dans lequel lesdites pages HTML incluent un guide de programmes électronique, ledit guide de programmes électronique incluant des URL pour des services diffusés.
